## Europäisches Patentamt
## European Patent Office
## Office européen des brevets

(19)

(11) Veröffentlichungsnummer: **0 031 908**

**A2**

(12) # EUROPÄISCHE PATENTANMELDUNG

(21) Anmeldenummer: **80107667.0**

(22) Anmeldetag: **05.12.80**

(51) Int. Cl.³: **G 05 B 19/04**

(30) Priorität: **18.12.79 DE 2950956**

(43) Veröffentlichungstag der Anmeldung:
**15.07.81 Patentblatt 81/28**

(84) Benannte Vertragsstaaten:
**AT BE CH FR GB IT LI LU NL SE**

(71) Anmelder: **ROTH-ELECTRIC GMBH**
**Grubmühlerfeldstrasse 32**
**D-8035 Gauting(DE)**

(72) Erfinder: **Weninger, Klaus**
**Lachener Strasse 64**
**D-8918 Diessen am Ammersee(DE)**

(74) Vertreter: **Eitner, Edmund F., Dipl.-Ing.**
**Schlotthauer Strasse 3**
**D-8000 München 90(DE)**

(54) **Verfahren und Schaltungsanordnung zum Steuern einer Vielzahl von Ausgangsgrössen in Abhängigkeit von einer Vielzahl von Eingangsgrössen.**

(57) Verfahren und Schaltungsanordnung zum Steuern einer Vielzahl von Ausgangsgrößen in Abhängigkeit von einer Vielzahl von Eingangsgrößen, bei dem die Eingangsgrößen zu jeweils eine bestimmte Anzahl von Eingangsgrößen umfassenden Eingangsgrößengruppen zusammengefaßt, die einzelnen Eingangsgrößengruppen über ein Eingangsfilter mit jeder Eingangsgrößengruppe zuzuordnender Eingabebaugruppe aufgearbeitet, insbesondere entstört und einer galvanischen Potentialtrennung sowie einer Pegelumsetzung unterworfen, und einer freiprogrammierbaren Steuereinheit zugeführt und schließlich die von der Steuereinheit gelieferten Ausgangsgrößen, zu Ausgangsgrößengruppen zusammengefaßt, über einen Ausgangsverstärker mit jeder Ausgangsgrößengruppe zugeordneter Ausgabebaugruppe aufbereitet, insbesondere einer Pegelumsetzung sowie einer Verstärkung unterworfen, und daraufhin an eine zu steuernde Maschine oder dergleichen ausgegeben werden, wobei die einzelnen Eingangsgrößengruppen mittels wenigstens einer zusätzlichen Ausgabebaugruppe aufeinanderfolgend im durch die Steuereinheit definierten, jeweils logisch richtigen Zeitpunkt jeweils einzeln an eine Eingabebaugruppe angeschaltet werden.

- 1 -

Verfahren und Schaltungsanordnung zum Steuern einer
Vielzahl von Ausgangsgrößen in Abhängigkeit von einer
Vielzahl von Eingangsgrößen

Die Erfindung betrifft ein Verfahren zum Steuern einer Vielzahl von Ausgangsgrößen in Abhängigkeit von einer Vielzahl von Eingangsgrößen, bei dem die Eingangsgrößen zu jeweils eine bestimmte Anzahl von Eingangsgrößen umfassenden Eingangsgrößengruppen zusammengefaßt, die einzelnen Eingangsgrößengruppen über ein Eingangsfilter mit jeder Eingangsgrößengruppe zuzuordnender Eingabebaugruppe aufgearbeitet, insbesondere entstört und einer galvanischen Potentialtrennung sowie einer Pegelumsetzung unterworfen, und einer freiprogrammierbaren Steuereinheit zugeführt und schließlich die von d/er Steuereinheit gelieferten Ausgangsgrößen, zu Ausgangsgrößengruppen zusammengefaßt, über einen Ausgangsverstärker mit jeder Ausgangsgrößengruppe zugeordneter Ausgabebaugruppe aufbereitet, insbesondere einer Pegelumsetzung sowie einer Verstärkung unterworfen, und daraufhin an eine zu steuernde Maschine oder dergleichen ausgegeben werden, sowie eine Schaltungsanordnung zum Steuern einer Vielzahl von Ausgangsgrößen in Abhängigkeit

- 2 -

von einer Vielzahl von Eingangsgrößen, mit einem die zu jeweils eine bestimmte Anzahl von Eingangsgrößen umfassenden Eingangsgrößengruppen zusammengefaßten Eingangsgrößen aufarbeitenden Eingangsfilter, welches mindestens eine jeder Eingangsgrößengruppe zuzuordnende Eingabebaugruppe, vorzugsweise mit Entstöreinheit, galvanischem Potentialtrenner, wie Optokoppler, und Pegelumsetzer, aufweist, einer freiprogrammierbaren Steuereinheit und einem Ausgangsverstärker, der für jede aus einer bestimmten Anzahl zusammengefaßter Ausgangsgrößen bestehende Ausgangsgrößengruppe eine Ausgabebaugruppe, vorzugsweise mit Pegelumsetzer und Verstärker, aufweist.

Bisher ist es in freiprogrammierbaren Steuerungen der gattungsgemäßen Art erforderlich, für jede der eine bestimmte Anzahl von Eingangsgrößen umfassenden Eingangsgrößengruppen jeweils eine Eingabebaugruppe vorzusehen, wobei also die einzelnen Eingabebaugruppen ihre Informationen der Steuereinheit parallel zueinander ständig anbieten, obwohl die Steuereinheit nur in der Lage ist, in einem bestimmten Arbeitsschritt oder Arbeitszyklus eine einzige Eingabebaugruppe abzufragen.

- 3 -

Der durch die Vielzahl von Eingabebaugruppen notwendige Kostenaufwand ist, insbesondere auch unter Berücksichtigung der erforderlichen Verkabelung etc., beträchtlich.

Der Erfindung liegt die Aufgabe zugrunde, ein Verfahren sowie eine Schaltungsanordnung der gattungsgemäßen Art zu schaffen, bei der die Zahl der Eingabebaugruppen und damit der Gesamtaufwand für die Steuerung beträchtlich vermindert werden können.

Erfindungsgemäß wird dies bei einem Verfahren der eingangs genannten Art dadurch gelöst, daß die einzelnen Eingangsgrößengruppen mittels wenigstens einer zusätzlichen Ausgabebaugruppe aufeinanderfolgend im durch die Steuereinheit definierten, jeweils logisch richtigen Zeitpunkt jeweils einzeln an eine Eingabebaugruppe angeschaltet werden.

Eine erfindungsgemäße Schaltungsanordnung der gattungsgemäßen Art ist gekennzeichnet durch wenigstens eine zusätzliche Ausgabebaugruppe, mittels welcher die einzelnen Eingangsgrößengruppen aufeinanderfolgend im durch

- 4 -

die Steuereinheit definierten, jeweils logisch richtigen Zeitpunkt jeweils einzeln an eine Eingabebaugruppe anschaltbar sind.

Besonders bevorzugte Ausführungsformen des Verfahrens sowie der Schaltungsanordnung nach der Erfindung ergeben sich aus den jeweiligen Unteransprüchen, wobei insbesondere vorgesehen sein kann, daß lediglich eine einzige Eingabebaugruppe in Verbindung mit einer einzigen zusätzlichen Ausgabebaugruppe Verwendung findet, welch letztere in besonders vorteilhafter Weise als Binärkodierer für die anzuschaltenden Eingangsgrößengruppen arbeitet.

Demzufolge wird durch die Erfindung die Anzahl der erforderlichen Eingabebaugruppen drastisch reduziert, vorzugsweise bis auf eine, während zusätzlich lediglich eine weitere Ausgabebaugruppe sowie gegebenenfalls verhältnismäßig preiswerte Dekoderkarten erforderlich sind.

- 5 -

Weitere Merkmale und Vorteile der Erfindung ergeben sich aus den Ansprüchen und aus der nachfolgenden Beschreibung, in der zwei Ausführungsbeispiele anhand der schematischen Zeichnung im einzelnen erläutert sind. Dabei zeigt:

Fig. 1 eine Schaltungsanordnung der gattungsgemäßen Art in Diagrammdarstellung;

Fig. 2 eine Eingabebaugruppe des Eingangsfilters der Schaltungsanordnung von Fig. 1 in Diagrammdarstellung;

Fig. 3 eine Übersicht über den Aufbau der gattungsgemäßen Schaltungsanordnung von Fig. 1 und Fig. 2 mit dem Anschluß an eine zu steuernde Maschine;

Fig. 4 in diagrammartiger Darstellung das Abfragen der verschiedenen Eingabebaugruppen des Eingangsfilters der gattungsgemäßen Schaltungsanordnung von Fig. 1 bis Fig. 3;

Fig. 5 ein erstes Ausführungsbeispiel einer erfindungsgemäßen Schaltungsanordnung in Diagrammdarstellung;

- 6 -

Fig. 6 ein zweites Ausführungsbeispiel einer Schaltungsanordnung nach der Erfindung in Diagrammdarstellung;

Fig. 7 das Ausführungsbeispiel von Fig. 6 in Verbindung
mit einer zu steuernden Maschine.

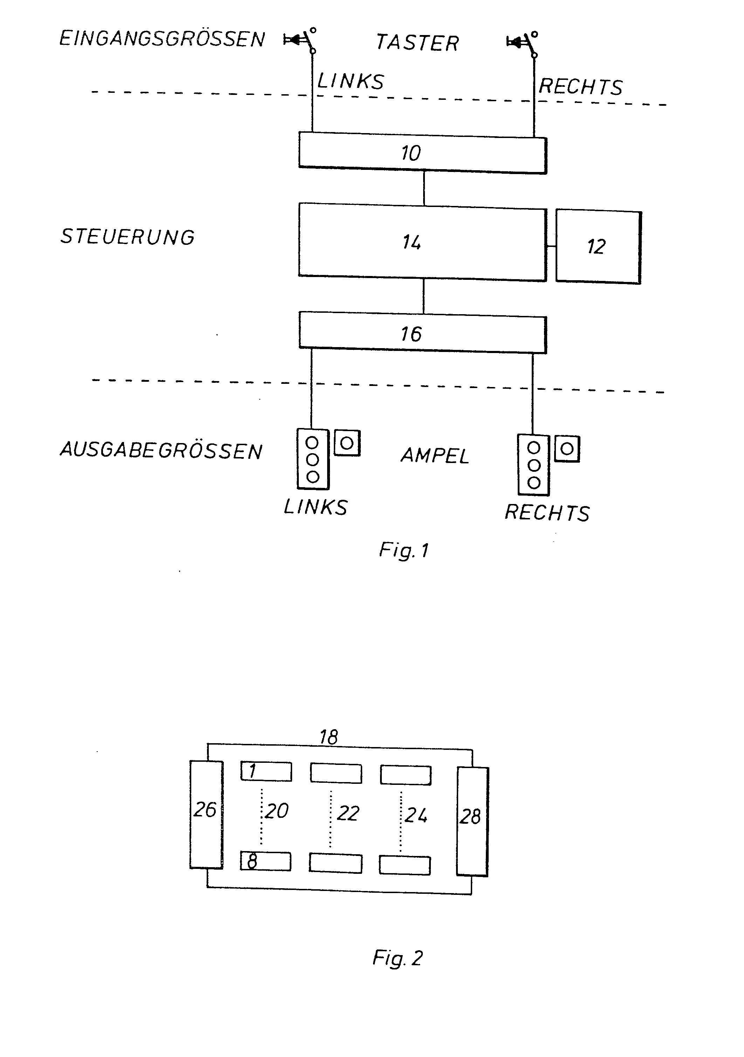

Wie Fig. 1 zeigt, bei der eine gattungsgemäße Schaltungsanordnung am Beispiel einer Fußgängerampel dargestellt
ist, gelangen Eingangsgrößen von einem dort schematisch
wiedergegebenen Taster "links" bzw. "rechts" zu einem
Eingangsfilter 10, welches einer mit einem Speicher 12
zusammenwirkenden Steuereinheit 14 vorgeschaltet ist.
Über einen der Steuereinheit 14 nachgeschalteten Ausgangsverstärker 16 gelangen dann die Ausgabegrößen oder
Befehlssignale an die in Fig. 1 unten schematisch gezeigten Ampeln "links" bzw. "rechts".

Die insoweit beschriebene elektronische freiprogrammierbare Steuerung hat eine Struktur, die in dem elektronischen Speicher 12 abgelegt ist, dessen Inhalt jederzeit
verändert werden kann, wobei in bekannter Weise als
Programmiergeräte beispielsweise Bildschirme oder Blattschreiber mit Tastatur geeignet sind. Das Eingangsfilter 10

- 7 -

weist eine Vielzahl von in Fig. 2 gezeigten Eingabebaugruppen 18 auf. Die in Fig. 2 gezeigte Eingabebaugruppe 18, die vorzugsweise die Form einer Steckkarte
haben kann, ist zur Verarbeitung einer noch zu erläuternden Eingangsgrößengruppe von 8 Eingangsgrößen ausgebildet, wobei für jede Eingangsgröße eine Entstöreinheit 20,
ein galvanischer Potentialtrenner 22 und ein Pegelumsetzer 24 vorgesehen sind. Links ist in Fig. 2 ein
Stecker 26 zu den Eingangsgrößen gezeigt, während
rechts ein Stecker 28 zur Steuerungseinheit 14 (Fig. 1)
dargestellt ist. Der galvanische Potentialtrenner 22
besteht beispielsweise aus einem bekannten Optokoppler,
bei dem die Eingangsgröße (das Eingangssignal) eine
Lampe beaufschlagt, deren Lichtstrahlen auf einen
Transistor gelangen.

Insgesamt hat das Eingangsfilter 10 sowohl bei der in
Fig. 1 und 2 wiedergegebenen gattungsgemäßen Schaltungsanordnung als auch bei der Erfindung somit die folgenden
Aufgaben: Zunächst einmal sollen die ankommenden Eingangsgrößen oder Eingangssignale, die insbesondere in
einer verketteten Anlage häufig kapazitiven und induktiven

- 8 -

Störeinflüssen unterliegen, welche die elektronische Steuerung negativ beeinflussen könnten, entstört werden. Außerdem ist eine galvanische Potentialtrennung zumindest zweckmäßig, weil nämlich die Spannungshöhe der Eingangsgrößen auf eine bestimmte, in Grenzen tolerierbare Größe festgelegt ist, wobei dann, wenn infolge eines Defektes eine wesentlich höhere Spannung, beispielsweise von 380 Volt, an eine Eingangsgröße angelegt wird, ohne eine galvanische Potentialtrennung nicht nur das Eingangsfilter, sondern die gesamte Steuerung zerstört werden könnte. Schließlich dient die Pegelumsetzung dazu, die Signalhöhe der Eingangsgrößen, die aus Sicherheitsgründen mindestens 24 Volt Gleichspannung betragen muß, auf die Standard-Arbeitsspannung (Logikspannung) von integrierten Schaltkreisen, nämlich 5 Volt Gleichspannung, umzusetzen.

Der Ausgangsverstärker 16 weist in ähnlicher Weise wie das Eingangsfilter 10 eine Vielzahl von Ausgabebaugruppen auf, die ebenfalls, beim gezeigten Ausführungsbeispiel, jeweils zur Verarbeitung von maximal 8 Ausgangsgrößen geeignet und steckkartenartig ausgebildet sind.

- 9 -

Der Ausgangsverstärker hat die Aufgabe, einmal eine Pegelumsetzung der vorstehend für das Eingangsfilter 10 beschriebenen Art in umgekehrter Richtung durchzuführen und außerdem die Ausgangsgrößen zu verstärken, weil nämlich die Befehlssignale, die aus den integrierten Schaltkreisen einer elektronischen Steuerung ankommen, beispielsweise nicht in der Lage sind, ein Ventil zu beeinflussen oder ein Relais zu schalten.

Wichtig ist, daß sowohl im Eingangsfilter 10 als auch im Ausgangsverstärker 16 jeweils eine Wirkungskette für jede Eingangsgröße bzw. jede Ausgangsgröße vorgesehen sein muß, so daß man also vereinfacht sagen kann, daß für jede Eingangsgröße ein spezielles Eingangsfilter und für jede Ausgangsgröße ein spezieller Ausgangsverstärker erforderlich sind:

Als Beispiel sei angenommen, daß die Zahl der Eingangsgrößen 100 und die Zahl der Ausgangsgrößen 50 beträgt, wobei also dann mittels der Steuerung oder Schaltungsanordnung 100 Eingangsgrößen und 50 Ausgangsgrößen verarbeitet werden müssen. Die Anzahl der Eingangsgrößen kann

- 10 -

dabei im übrigen, je nach Anforderung, bis zu 1000 und mehr pro Steuerung steigen. Die Eingangs- und Ausgangsgrößen befinden sich alle in einer Maschine 30, deren Ablauf (Steuerkette) automatisch kontrolliert werden soll. Werden nun Eingangsbaugruppen 18 für das Eingangsfilter 10 verwendet, die zur Verarbeitung von jeweils 8 Eingangsgrößen geeignet sind, und verwendet man analoge Ausgabebaugruppen für den Ausgangsverstärker 16, wobei sowohl die Eingangsbaugruppen 18 als auch die Ausgangsbaugruppen die Form von Steckkarten im Standard-Europaformat haben können, also mit einer Länge von 160 mm und einer Breite von 100 mm, so ist es offensichtlich erforderlich, eine Anzahl von Eingangsbaugruppen und Ausgangsbaugruppen zu verwenden, die sich zu einem Achtel des der Anzahl der Eingangsgrößen bzw. der Ausgangsgrößen nächsthöheren Vielfachen von 8 ergibt. Bei dem hier gebrachten Beispiel sind somit 13 Eingabebaugruppen 18 sowie 7 Ausgabebaugruppen notwendig.

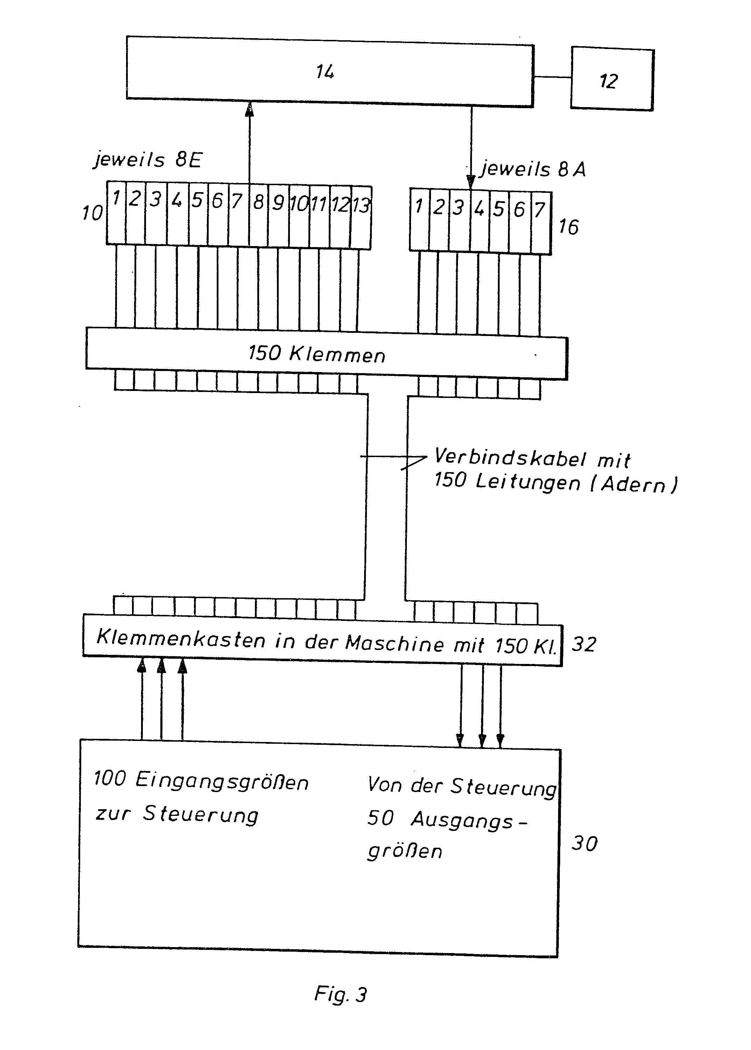

In Fig. 3 ist dargestellt, auf welche Weise bei dem hier betrachteten gattungsgemäßen Beispiel die Verbindungsstruktur der Steuerung mit der Maschine 30 aufgebaut ist.

- 11 -

Fig. 3 läßt erkennen, daß die Steuereinheit 14 mit Speicher 12 offensichtlich wesentlich kleiner als die Anzahl der Ein- und Ausgabebaugruppen ist, so daß also die letztgenannten Baugruppen den größeren Kostenfaktor für die Gesamtsteuerung darstellen. Einen weiteren beträchtlichen Aufwand stellt die erforderliche Verbindung der Ein- und Ausgabebaugruppen mit den Klemmen der Steuerung und die Verbindung über Vieladerkabel mit dem Klemmenkasten 32 der Maschine 30 dar. Vergleicht man nun die Anzahl der Eingangsgrößen mit der Anzahl der Ausgangsgrößen, so ergibt sich beim hier diskutierten Beispiel ein Verhältnis von 2:1, welches in den meisten Steuerungsfällen zutrifft, wobei aber die Anzahl der Eingangsgrößen diejenige der Ausgangsgrößen auch leicht um den Faktor 4 übersteigen kann. Dies würde also bedeuten, bei einer Anzahl von 200 Eingangsgrößen nämlich, daß 26 Eingabebaugruppen, 250 Klemmen und ein Verbindungskabel mit 250 Adern erforderlich wären. Eingehende Untersuchungen haben gezeigt, daß in den meisten Anwendungsbeispielen die Anzahl der Eingangsgrößen mindestens um den Faktor 2 größer als diejenige der Ausgangsgrößen ist.

- 12 -

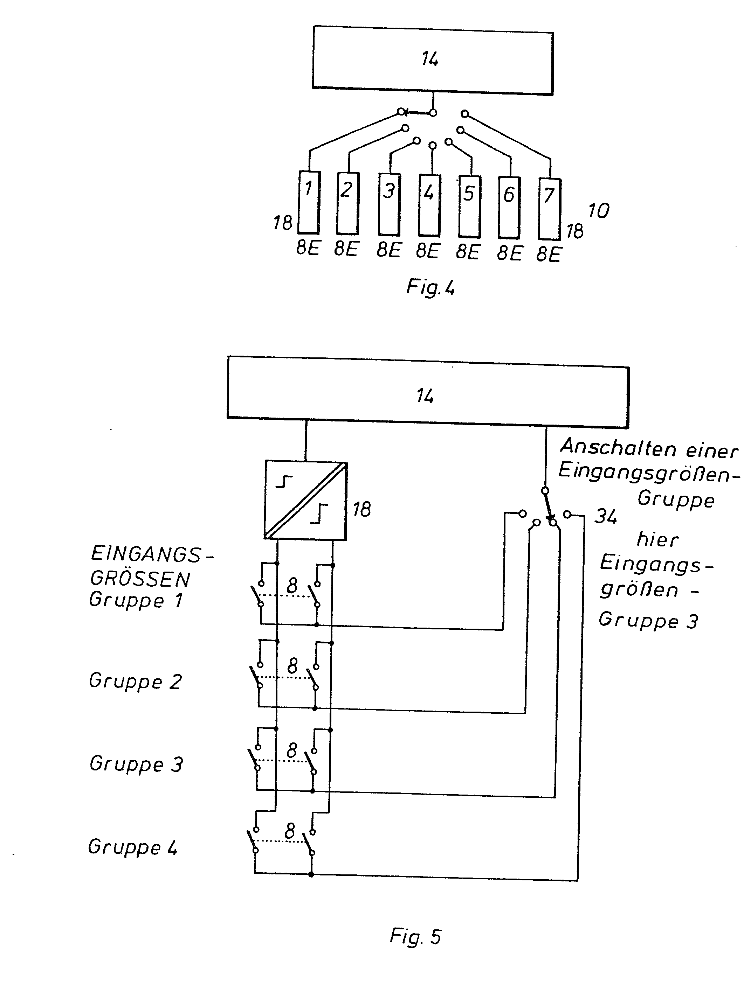

In Fig. 4 ist im übrigen gezeigt, auf welche Weise die einzelnen Eingabebaugruppen 18 die durch sie verarbeiteten Eingangsgrößen an die Steuereinheit 14 beim Stand der Technik abgeben: Die Eingangsbaugruppen 18 bieten ihre Informationen der Steuereinheit 14 zwar ständig parallel an, jedoch ist die Steuereinheit 14 pro Arbeitszyklus nur in der Lage, Eingangsgrößen von einer einzigen Eingabebaugruppe 18 zu verarbeiten, wobei dasselbe im übrigen auch für die Ausgabebaugruppen zutrifft. Dementsprechend werden, wie Fig. 4 schematisch erkennen läßt, die einzelnen Eingabebaugruppen 18 des Eingangsfilters 10 nacheinander durch die Steuereinheit 14 abgefragt.

Bei der erfindungsgemäßen Schaltungsanordnung bzw. bei dem erfindungsgemäßen Verfahren, dem ersten Ausführungsbeispiel entsprechend, wie es in Fig. 5 wiedergegeben ist, wird nun so vorgegangen, daß die Eingangsgrößen zu Eingangsgrößengruppen von jeweils höchstens - beim gezeigten Ausführungsbeispiel - 8 einzelnen Eingangsgrößen zusammengefaßt werden. Die Eingangsgrößengruppen 1 bis 4, die in Fig. 5 wiedergegeben sind, werden im jeweils logisch richtigen Zeitpunkt mittels einer zusätzlichen Ausgabebaugruppe 34 durch die Steuereinheit 14

- 13 -

selbst an eine einzige Eingabebaugruppe 18 angeschaltet, so daß also hier nicht parallel zueinander eine Vielzahl von Eingabebaugruppen notwendig ist, sondern lediglich eine einzige Eingabebaugruppe 18, die, wie gesagt, im jeweils logisch richtigen Zeitpunkt durch die Steuereinheit 14 angeschaltet wird. Hierzu ist es lediglich erforderlich, eine einzige zusätzliche Ausgabebaugruppe 34 vorzusehen. Die Schaltungsanordnung von Fig. 5 arbeitet also in der Weise, daß zunächst alle Eingangsgrößen in unabhängige Eingangsgrößengruppen von 8 oder weniger Signalen aufgeteilt werden. Zum logisch notwendigen und richtigen Zeitpunkt wird jeweils eine Eingangsgrößengruppe durch die Steuereinheit 14 an die einzige Eingabebaugruppe 18 angeschaltet, so daß also die entsprechenden Signalzustände der betreffenden Eingangsgrößengruppe in die Steuereinheit 14 eingelesen werden können. Im Anschluß hieran wird die vorher aktivierte Eingangsgrößengruppe durch die Steuereinheit 14 sofort wieder von der Eingabebaugruppe 18 abgeschaltet. Enthält die verwendete zusätzliche Ausgabebaugruppe, wie bei der oben diskutierten gattungsgemäßen Schaltungsanordnung von Fig. 1 bis Fig. 4, 8 Ausgangsgrößen, so lassen sich also mittels des in Fig. 5 gezeigten Ausführungsbeispieles 8 verschiedene Eingangsgrößengruppen mit jeweils 8 Eingangsgrößen an die einzige vorhandene Eingabebaugruppe 18 anschalten, also maximal 64 Eingangsgrößen.

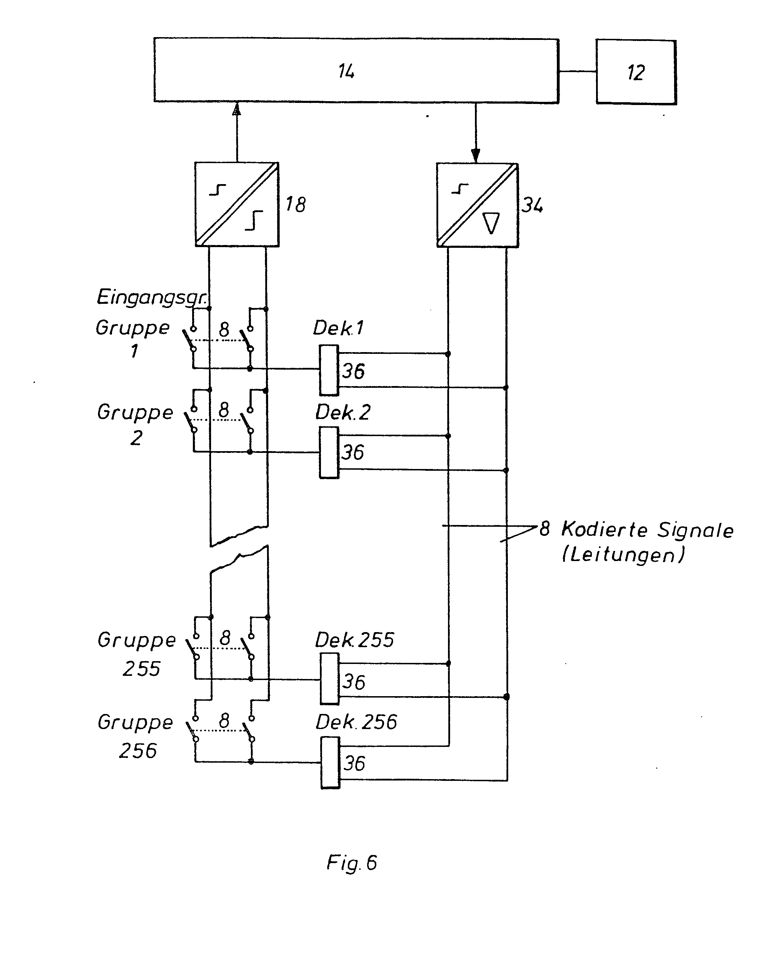

Wie in Fig. 6 gezeigt ist, läßt sich die Anzahl der mittels einer einzigen Eingabebaugruppe 18 verarbeitbaren Eingangsgrößen noch beträchtlich erhöhen, wenn die Auswahl der jeweils an die Eingabebaugruppe anzuschaltenden Eingangsgrößengruppe durch die zusätzliche Ausgabebaugruppe in binärkodierter Form erfolgt, wobei also, sofern die zusätzliche Ausgabebaugruppe, wie beim oben diskutierten Beispiel, 8 Ausgangsgrößen aufweist, 256 verschiedene Kombinationen schaltbar sind. Da jede Eingangsgrößengruppe maximal 8 Eingangsgrößen aufweist, ergibt sich hieraus eine Anzahl von mittels einer einzigen Eingabebaugruppe und einer einzigen zusätzlichen Ausgabebaugruppe verarbeitbaren Eingangsgrößen von 2048.

Um die kodierten Informationen dekodieren zu können, weist die in Fig. 6 gezeigte Schaltungsanordnung Dekoder 36 in Form von Dekoderkarten auf. Der Kostenaufwand derartiger Dekoderkarten ist aber um den Faktor 10 niedriger als der der Eingabebaugruppen-Karten, so daß eine beträchtliche Kostenersparnis auftritt.

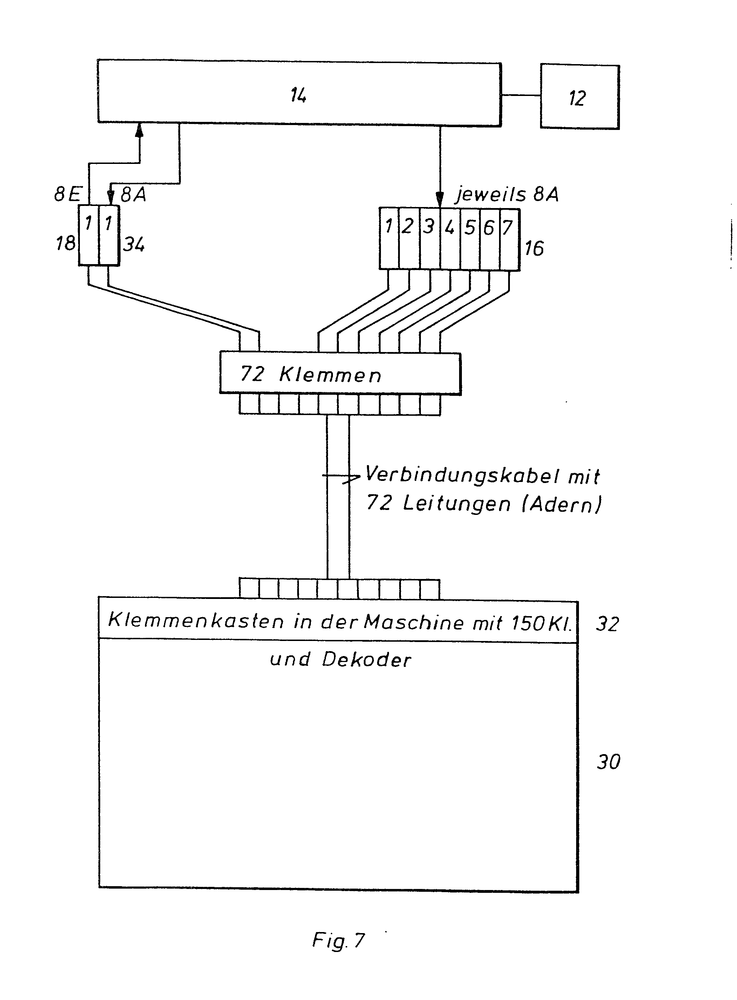

Die Dekoderkarten werden im übrigen, wie aus Fig. 7 ersichtlich, welche die Schaltungsanordnung von Fig. 6 in an eine Maschine 30 angeschlossener Form zeigt, im Klemmenkasten 32 der Maschine untergebracht.

Beim vorstehend beschriebenen Beispiel lassen sich also von den 13 ansonsten, nämlich beim Stand der Technik, notwendigen Eingabebaugruppen 18 zwölf einsparen. Nimmt man ein Verhältnis von Eingangsgrößen zu Ausgangsgrößen von 4 : 1 an, so sind bereits 25 Eingabebaugruppen eingespart. Während bei einer Steuerung von 1000 Eingangsgrößen beim herkömmlichen System 125 Eingabebaugruppen, 1000 Klemmen und 1000 Leitungen (Adern) erforderlich sind, sind erfindungsgemäß lediglich eine einzige Eingabebaugruppe, eine einzige Ausgabebaugruppe, 125 Dekoder, 16 Klemmen und 16 Adern notwendig. Die Anzahl der Ausgabebaugruppen ist natürlich, abgesehen von der zusätzlichen Ausgabebaugruppe 34, in beiden Fällen gleich.

- 16 -

Die in der vorstehenden Beschreibung, in der Zeichnung und in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

- 17 -

Patentansprüche

1. Verfahren zum Steuern einer Vielzahl von Ausgangsgrößen in Abhängigkeit von einer Vielzahl von Eingangsgrößen, bei dem die Eingangsgrößen zu jeweils eine bestimmte Anzahl von Eingangsgrößen umfassenden Eingangsgrößengruppen zusammengefaßt, die einzelnen Eingangsgrößengruppen über ein Eingangsfilter mit jeder Eingangsgrößengruppe zuzuordnender Eingabebaugruppe aufgearbeitet, insbesondere entstört und einer galvanischen Potentialtrennung sowie einer Pegelumsetzung unterworfen, und einer freiprogrammierbaren Steuereinheit zugeführt und schließlich die von der Steuereinheit gelieferten Ausgangsgrößen, zu Ausgangsgrößengruppen zusammengefaßt, über einen Ausgangsverstärker mit jeder Ausgangsgrößengruppe zugeordneter Ausgabebaugruppe aufbereitet, insbesondere einer Pegelumsetzung sowie einer Verstärkung unterworfen, und daraufhin an eine zu steuernde Maschine oder dergleichen ausgegeben werden, dadurch gekennzeichnet, daß die einzelnen Eingangsgrößengruppen mittels wenigstens einer zusätzlichen Ausgabebaugruppe aufeinanderfolgend im durch die Steuereinheit definierten, jeweils logisch richtigen Zeitpunkt jeweils einzeln an eine Eingabebaugruppe angeschaltet werden.

2. Verfahren nach Anspruch 1, dadurch gekennzeichnet, daß
die Auswahl der jeweils an die Eingabebaugruppe(n) anzuschaltenden Eingangsgrößengruppe durch die zusätzliche(n) Ausgabebaugruppe(n) in binärkodierter Form erfolgt, wobei der Binärkode durch die jeweilige Kombination der möglichen Ausgangsgrößen der zusätzlichen Ausgabebaugruppe(n) festgelegt wird.

3. Verfahren nach Anspruch 1 oder 2, dadurch gekennzeichnet, daß nur eine einzige Eingabebaugruppe verwendet
wird.

4. Verfahren nach einem der vorangehenden Ansprüche, dadurch gekennzeichnet, daß nur eine einzige zusätzliche
Ausgabebaugruppe verwendet wird.

5. Verfahren nach einem der Ansprüche 2 bis 4, dadurch gekennzeichnet, daß jeder der Eingangsgrößengruppen ein
Dekoder für die binärkodierten Anschaltsignale zugeordnet
wird.

- 19 -

6. Verfahren nach einem der vorangehenden Ansprüche, dadurch gekennzeichnet, daß die Eingangsgrößen zu Eingangsgrößengruppen mit jeweils höchstens 8 Eingangsgrößen zusammengefaßt werden, wobei die Eingabebaugruppe(n) zur Verarbeitung von 8 Eingangsgrößen eingerichtet ist bzw. sind.

7. Verfahren nach einem der vorangehenden Ansprüche, dadurch gekennzeichnet, daß die Ausgangsgrößen zu Ausgangsgrößengruppen mit jeweils höchstens 8 Ausgangsgrößen zusammengefaßt werden, wobei die Ausgabebaugruppe(n) jeweils zum Verarbeiten von 8 Ausgangsgrößen eingerichtet ist bzw. sind.

8. Verfahren nach Anspruch 6 oder 7, dadurch gekennzeichnet, daß die zusätzliche Ausgabebaugruppe zum Verarbeiten von 8 Ausgangsgrößen eingerichtet ist.

9. Schaltungsanordnung zum Steuern einer Vielzahl von Ausgangsgrößen in Abhängigkeit von einer Vielzahl von Eingangsgrößen, mit einem die zu jeweils eine bestimmte Anzahl von Eingangsgrößen umfassenden Eingangsgrößengruppen zusammengefaßten Eingangsgrößen aufarbeitenden

Eingangsfilter, welches mindestens eine jeder Eingangsgrößengruppe zuzuordnende Eingabebaugruppe, vorzugsweise mit Entstöreinheit, galvanischem Potentialtrenner, wie Optokoppler, und Pegelumsetzer, aufweist, einer freiprogrammierbaren Steuereinheit und einem Ausgangsverstärker, der für jede aus einer bestimmten Anzahl zusammengefaßter Ausgangsgrößen bestehende Ausgangsgrößengruppe eine Ausgabebaugruppe, vorzugsweise mit Pegelumsetzer und Verstärker, aufweist, gekennzeichnet durch wenigstens eine zusätzliche Ausgabebaugruppe (34), mittels welcher die einzelnen Eingangsgrößengruppen aufeinanderfolgend im durch die Steuereinheit (14) definierten, jeweils logisch richtigen Zeitpunkt jeweils einzeln an eine Eingabebaugruppe (18) anschaltbar sind.

10. Schaltungsanordnung nach Anspruch 9, dadurch gekennzeichnet, daß die zusätzliche(n) Ausgabebaugruppe(n) (34) als Binärkodierer zum Auswählen der jeweils an die Eingabebaugruppe(n) (18) anzuschaltenden Eingangsgrößengruppe ausgebildet ist bzw. sind, wobei der Binärkode durch die jeweilige Kombination der möglichen Ausgangsgrößen der zusätzlichen Ausgabebaugruppe(n) festgelegt ist.

11. Schaltungsanordnung nach Anspruch 9 oder 10, dadurch gekennzeichnet, daß nur eine einzige Eingabebaugruppe (18) vorgesehen ist.

12. Schaltungsanordnung nach einem der Ansprüche 9 bis 11, dadurch gekennzeichnet, daß nur eine einzige zusätzliche Ausgabebaugruppe (34) vorgesehen ist.

13. Schaltungsanordnung nach einem der Ansprüche 10 bis 12, dadurch gekennzeichnet, daß jeder der Eingangsgrößengruppen ein Dekoder (36) für die binärkodierten Anschaltsignale zugeordnet ist.

14. Schaltungsanordnung nach Anspruch 13, dadurch gekennzeichnet, daß die Dekoder (36) im Klemmenkasten (32) der durch die Steuereinrichtung (14) gesteuerten Maschine (30) oder dergleichen angeordnet sind.

15. Schaltungsanordnung nach einem der Ansprüche 9 bis 14, dadurch gekennzeichnet, daß die Eingangsbaugruppe(n) (18) zur Verarbeitung von 8 Eingangsgrößen eingerichtet ist bzw. sind.

- 22 -

16. Schaltungsanordnung nach einem der Ansprüche 9 bis 15, dadurch gekennzeichnet, daß die Ausgabebaugruppen jeweils zum Verarbeiten von 8 Ausgangsgrößen eingerichtet sind.

17. Schaltungsanordnung nach Anspruch 15 oder 16, dadurch gekennzeichnet, daß die zusätzliche Ausgabebaugruppe (34) zum Verarbeiten von 8 Ausgangsgrößen eingerichtet ist.

18. Schaltungsanordnung nach einem der Ansprüche 9 bis 17, dadurch gekennzeichnet, daß die Eingabebaugruppe(n) (18) und/oder die Ausgabebaugruppen und/oder die zusätzliche(n) Ausgabebaugruppe(n) (34) als Steckkarte(n) ausgebildet ist bzw. sind.

EINGANGSGRÖSSEN

TASTER

LINKS

RECHTS

10

STEUERUNG

14

12

16

AUSGABEGRÖSSEN

AMPEL

LINKS

RECHTS

Fig.1

18

1

26  20  22  24  28

8

Fig. 2

*Fig. 3*

Fig. 4

EINGANGS-
GRÖSSEN
Gruppe 1

Gruppe 2

Gruppe 3

Gruppe 4

Anschalten einer
Eingangsgrößen-
Gruppe

hier
Eingangsgrößen -
Gruppe 3

Fig. 5

Fig. 6

Fig. 7